# EUROPEAN PATENT APPLICATION

(11) **EP 1 426 466 A1**
(43) Date of publication of application: **09.06.2004**
(21) Application number: 02733436.6
(22) Date of filing: 10.06.2002
(51) Int. Cl.: C23C 22/40, C23C 22/42, C23C 22/34, C23C 22/36

(54) **SURFACE TREATMENT FOR METAL, PROCESS FOR SURFACE TREATMENT OF METALLIC SUBSTANCES AND SURFACE−TREATED METALLIC SUBSTANCES**

(30) Priority: 26.06.2001 JP 2001193169
(71) Applicant: Henkel Kommanditgesellschaft auf Aktien, 40589 Düsseldorf (DE)
(72) Inventor: HASEGAWA, Ryu, c/o Nihon Parkerizing Co., Ltd., Tokyo 103-0027 (JP); UENO, Keiichi, c/o Nihon Parkerizing Co., Ltd., Tokyo 103-0027 (JP); SAKO, Ryosuke, c/o Nihon Parkerizing Co., Ltd., Tokyo 103-0027 (JP)
(74) Representative: Endres, Helmut
(86) International application number: PCT/JP2002/005732
(87) International publication number: WO 2003/000953

(57) **Abstract**

A surface treatment for metal, prepared by adding a cationic or nonionic,. urethane, acrylic, epoxy, polyester, or polyamide resin, a resin compound represented by the general formula (I), and a compound of Zr, Ti, V, Mo, W, Mn, or Co to water; a process for surface treatment of metallic substances, and surface-treated metallic substances: (I) [wherein R¹ is -CH₂-, CH₂-NH-CH₂-, or -CH=N-CH₂-Y is H or a group represented by the general formula (II)-(II) Z is a residue of an aromatic compound or the like; W is H or a group (P) selected from among -CH₂X, -CH₂NHCH₂X, and -CH=NCH₂X (wherein X is OH, OR⁴, halogeno, -N(R⁵)(R⁶), or -N⁺(R⁷)(R⁸(R⁹)A⁻), with the proviso that the degree of substitution with the group (P) satisfies the relationship: (member of Ps)/(total number of benzene rings and Zs) = 0.2 to 4.0; n is 0 to 10). The surface treatment is free from chromium and can import excellent corrosion resistance, alkali resistance and fingerprinting resistance to metallic substances.

## Description

### Technical Field

The present invention pertains to a surface treatment agent for metal to be used for forming a film that can impart excellent corrosion resistance, alkali resistance, and fingerprint resistance to the surfaces of sheet coil and formed products made of metals and that does not contain chromium; to a surface treatment process for metal; and to surface-treated metallic materials.

In more detail, the present invention pertains to a surface treatment agent to be used for forming a film that does not contain chromium, that imparts excellent corrosion resistance, alkali resistance, solvent resistance, and fingerprint resistance to formed products such as automobile bodies, automotive parts, building materials, and parts for consumer electronics, cast products, sheet coil, etc., prepared from steel sheet with zinc-based plating, steel sheet, or aluminum-based metallic materials; to a surface treatment process; and to surface-treated metallic materials.

### Background Techniques

Metallic materials such as steel sheet and steel sheet with zinc-based plating are oxidized by oxygen in the atmosphere, water, the ions contained in water, etc., and thus become corroded. For preventing the corrosion of these materials in accordance with a previous method, a chromate film is deposited by bringing the surfaces of said metallic materials into contact with a treatment solution that contains chromium, such as chromic acid chromate, or by applying said solution and then drying. However, these inorganic chromate films alone are insufficient with regard to corrosion resistance over long periods of time or in especially harsh environments, even though they display a short-term rust-preventive property in relatively mild environments. Furthermore, if sheet coil treated with chromate only is cut and formed, not only does the prepared film tend to drop off, thus spoiling the appearance, but the sheet coil cannot be worked satisfactorily and problems occur in that cracks develop in the base material, because the film is hard and brittle and lacks lubricity. In addition, the fingerprints of the workers adhere during processing, and traces of them remain even if degreasing and cleaning are performed, thus once again spoiling the appearance. Therefore, a double-layer treatment is generally carried out, in which a chromate film is formed on the surface of a metallic material and further a resin film is provided on the formed chromate film, in order to satisfy all requirements such as corrosion resistance, fingerprint resistance, scratch resistance, lubricity, and coat adhesion. Moreover, the chromate film requires time to apply and the process is expensive with regard to the wastewater treatment which is needed since the treatment solution contains harmful hexavalent chromium. What is more, the process is inadequate in terms of performance, and is generally avoided from an environmental and safety point of view because the formed film also contains hexavalent chromium.

In an attempt to produce all the desired properties with a single-layer treatment, resin chromating was investigated, in which a chromate film and a resin film form simultaneously. For example, a treatment process that applies a resin composition prepared by combining a specified water-dispersed or water-soluble resin and a specified amount of hexavalent chromium to the surface of aluminum-zinc coated steel sheet, is disclosed in Japanese Patent Kokoku No. 4[1992]-2,672, and metal surface treatment compositions that contain hexavalent chromium ions or hexavalent chromium ions and trivalent chromium ions of an inorganic compound, and an acrylic emulsion polymerized at specified emulsion polymerization conditions are disclosed in Japanese Patent Kokoku No. 7[1995]-6,070. However, the hexavalent chromium contained in the film dissolves out gradually, although in very small amounts, and causes problems from the environmental and safety point of view, as mentioned earlier.

The following methods are disclosed in various Japanese Patents as methods using non-chromate solutions that contain no chromium: polymer composition for the surface treatment of metallic materials that contains a phenolic resin-based polymer with a specified structure and an acidic compound, and a surface treatment process in Japanese Patent Kokai No. 7[1995]-278,410; surface treatment agent for metal with excellent fingerprint resistance that contains two or more silane coupling agents that contain reactive functional groups with specified structures that are dissimilar and can react mutually, and a surface treatment process in Japanese Patent Kokai No. 8[1996]-73,775; surface treatment agent for metal containing a silane coupling agent with a specified structure and a phenolic resin-based polymer with a specified structure, and a treatment process in Japanese Patent Kokai No. 9[1997]-241,576; surface treatment agent for metal containing an organic polymer such as an epoxy resin with at least one nitrogen atom, an acrylic resin, or a urethane resin, and a specified multicharged anion, treatment process, and treated metallic materials in Japanese Patent Kokai No. 10[1998]-1,789; and (1) a rust preventive containing a bisphenol-A epoxy resin with a specified structure, (2) a rust preventive containing a phenolic resin and a specified resin other than a phenolic resin, such as a polyester, a treatment process using (1) and (2), and treated metallic materials in Japanese Patent Kokai No. 10[1998]-60,233.

However, metal surface treatments with no chromium cannot provide sufficient corrosion resistance, particularly corrosion resistance in scratched areas and worked areas, and the corrosion resistance they do provide is nowhere near as good as that provided by a chromate film. Although these no-chromium metal surface treatments tend to be inadequate with regard to providing fingerprint resistance, scratch resistance, and lubricity, they do provide an advantage in that the treatment solution contains no hexavalent chromium.

Accordingly, no such non-chromate surface treatment agent for metal has been developed under the present circumstances that will form a film that can impart excellent corrosion resistance, alkali resistance, and fingerprint resistance all at the same time to the surfaces of metallic materials.

### Disclosure of the Invention

The present invention was developed to solve the problems of the aforesaid conventional techniques; thus, the object of the present invention is to provide a chromium-free surface treatment agent for metal to be used for imparting excellent corrosion resistance, alkali resistance, solvent resistance, and fingerprint resistance to metallic materials, a metal surface treatment process, and surface-treated metallic materials.

The present inventors carried out extensive investigations with regard to approaches to solving said problem, and as a result found that a film with excellent corrosion resistance, alkali resistance, solvent resistance, and fingerprint resistance can be obtained by treating the surface of a metallic material with the use of a water-based surface treatment agent composed essentially of a specified water-soluble resin or water-based emulsion resin, a resin compound with a specified structure, and a specified metal compound. It was this discovery that led to the development of the present invention.

Specifically, the metal surface treatment agent of the present invention is characterized in that at least one type of water-soluble resin or water-based emulsion resin (A) selected from among cationic or nonionic urethane, acrylic, epoxy, polyester, and polyamide resins, a resin compound (B) represented by the general formula (I), and a metal compound (C) containing at least one type of metal selected from the group consisting of Zr, Ti, V, Mo, W, Mn, and Ce are added to water. 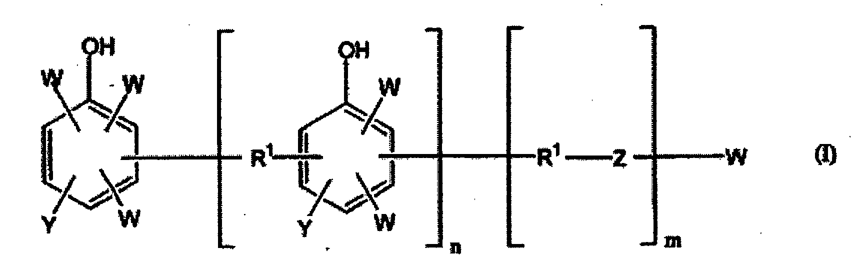 {In the formula, each R¹ independently represents -CH₂-, -CH₂-NH-CH₂-, or
-CH=N-CH₂-; Y represents a hydrogen atom or a group represented by the general formula (II) 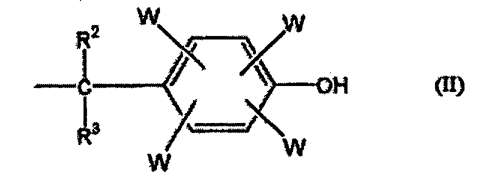 (wherein R² and R³ independently represent a hydrogen atom or an alkyl group with 1 to 3 carbon atoms); Z is a bivalent group that is generated with the loss of hydrogen atoms bonded to carbon atoms constituting the aromatic ring from an aromatic compound that can undergo addition condensation with formaldehyde, may have 1 to 4 -CH₂X groups (wherein X represents the same as X in the definition of W mentioned below), and differs from the aromatic ring group in the structure enclosed in brackets with subscript n, or a bivalent group generated with the loss of one hydrogen atom from each of two amino groups of melamine, guanamine, or urea; each W is independently hydrogen or a group P, said P being -CH₂X, -CH₂NHCH₂X, or -CH=NCH₂X [wherein X is OH, OR⁴ (R⁴ representing an alkyl group with 1 to 5 carbon atoms or hydroxyalkyl group with 1 to 5 carbon atoms), a halogen atom, or a group represented by the general formula (III) or (IV): 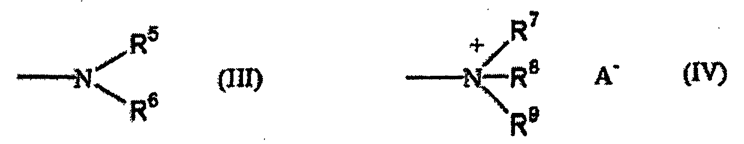 (wherein R⁵, R⁶, R⁷, R⁸, and R⁹ independently represent a hydrogen atom, an alkyl group with 1 to 10 carbon atoms, or a hydroxyalkyl group with 1 to 10 carbon atoms, and A represents a hydroxyl ion or acid ion)], the degree of substitution with group P satisfying the relationship: (number of Ps)/( total number of benzene rings and Zs) = 0.2 to 4.0, and the ratio: (number of -CH₂X groups where X is a functional group represented by the formula (III) or (IV) + number of -CH₂NHCH₂X groups + number of -CH=NCH₂X groups /(total number of Ps) being 0.1 to 1.0; n is 0 or an integer of 1 to 29; and m is 0 or an integer of 1 to 10.}

Furthermore, it is desirable to further add at least one type of acid (D) selected from among nitric acid, phosphoric acid, and hydrofluoric acid to the above-mentioned metal surface treatment agent of the present invention, and it is even more desirable to further add a silane coupling agent (E).

The present invention also pertains to a surface treatment process for metallic materials, characterized in that the above-mentioned surface treatment agent is applied to the surface of a metallic material and dried, and thereby a film is formed on said metallic material surface.

The present invention also pertains to metallic materials with a film formed by using the above-mentioned surface treatment process.

### Best Mode of Carrying Out the Invention

The present invention will be described in detail below. The metal surface treatment agent and surface treatment process of the present invention are suitable for steel sheets such as cold rolled steel sheet, carbon steel sheet, and silicon steel sheet, coated steel sheet, and aluminum-based metallic materials. Coated steel sheet includes steel sheets with zinc-containing plating subjected to plating processes such as zinc electroplating, hot-dip zinc coating, 55% aluminum zinc plating, 5% aluminum zinc plating, aluminum plating, and iron-zinc plating. The aluminum-based metallic materials include metallic materials consisting mainly of aluminum or aluminum alloys, such as pure aluminum materials, aluminum alloy materials, and aluminum die-cast materials.

At least one type of water-soluble resin or water-based emulsion resin (A) selected from among cationic or nonionic urethane, acrylic, epoxy, polyester, and polyamide resins to be added to the metal surface treatment agent of the present invention is an urethane, acrylic, epoxy, polyester, or polyamide resin having in its molecular structure at least one functional group selected from cationic functional groups such as a primary amino group, secondary amino group, tertiary amino group, and quaternary ammonium group, and nonionic functional groups such as a polyoxyethylene group, hydroxyl group, primary amide group, secondary amide group, and tertiary amide group, and is in water-soluble form or a water-based emulsion form.

The water-soluble resin or water-based emulsion resin (A) must be cationic or nonionic. The cationic or nonionic functional group in the resin (A) contributes to making the resin (A) water-soluble or water-dispersible, and also contributes to compatibility with the resin compound (B) and metal compound (C).

The dissolution or dispersion of resin (A) in water may be achieved based on the self-solubility or self-dispersibility of resin (A) in water, or with the aid of a cationic surfactant (e.g., an alkyl quaternary ammonium salt) and/or a nonionic surfactant (e.g., an alkyl phenyl ether).

Examples of water-soluble resins or water-based emulsion resins (A) can be given as follows: copolymerized acrylic resin emulsions of cationic monomers that contain an amino group, for example, *N,N*-dialkylaminoalkyl (meth)acrylates or *N*-alkylaminoalkyl (meth)acrylates (examples of alkyl groups as substituents in the amino group including those with 1 to 4 carbon atoms, particularly 1 or 2 carbon atoms, and examples of alkyl groups substituted with the substituted amino group including those with 1 to 6 carbon atoms, particularly 1 to 4 carbon atoms) such as *N,N*-dimethylaminopropyl acrylate and *N*-methylaminoethyl, and/or nonionic monomers (particularly (meth)acrylates) that contain a hydrophilic group such as a polyoxyethylene or a hydroxyl group, such as polyethylene glycol (meth)acrylate, 2-hydroxyethyl (meth)acrylate, and 3-hydroxypropyl (meth)acrylate, with addition polymerizable unsaturated monomers such as acrylic monomers, examples including (meth)acrylic acid esters [particularly (meth)acrylic acid alkyl esters (suitable alkyl groups being those with 1 to 8, preferably 1 to 6, and even more preferably 1 to 4 carbon atoms)], styrene, acrylonitrile, and vinyl acetate; and
a polyurethane that can be obtained by using a polyol with a (substituted) amino group (e.g., *N,N* dimethylaminodimethylol propane) or a polyol with a polyoxyethylene group (e.g., polyethylene glycol) as some of the polyols to be used in a urethane resin that is a condensation product of a polyol such as polyether polyol, polyester polyol, or polycarbonate polyol and an aliphatic, alicyclic, or aromatic polyisocyanate.

In the above description, examples of polyether polyols include polyethylene glycols such as diethylene glycol and triethylene glycol, and polyethylene/propylene glycol. Examples of polyester polyols include polyester polyols with hydroxyl groups at the terminals that can be obtained by the polycondensation of polyols such as alkylene (e.g., 1 to 6 carbon atoms) glycols (ethylene glycol, propylene glycol, butylene glycol, neopentyl glycol, hexamethylene glycol, etc.), polyether polyols as mentioned above, bisphenol A, hydrogenated bisphenol A, trimethylol propane, and glycerol, with polybasic acids such as succinic acid, glutaric acid, adipic acid, sebacic acid, phthalic acid, isophthalic acid, terephthalic acid, and trimellitic acid. Examples of aliphatic, alicyclic, or aromatic polyisocyanates include tolylenediisocyanate, diphenylmethanediisocyanate, xylylenediisocyanate, dicyclohexylmethanediisocyanate, cyclohexylenediisocyanate, hexamethylenediisocyanate, and lysinediisocyanate; epoxy resins cationized by reacting bisphenol-type, particularly bisphenol-A-type, epoxy compounds or other glycidyl ether compounds with alkylene (e.g., 1 to 6 carbon atoms) diamines or aromatic diamines such as ethylene diamine, trimethylene diamine, tetramethylene diamine, hexamethylene diamine, and phenylene diamine, or nonionic epoxy resins prepared by adding polyethylene glycol to side chains of epoxy resins; and polyester resins which are polycondensation products of polyol components such as ethylene glycol and neopentyl glycol and polybasic acids such as terephthalic acid and trimellitic acid, wherein all the carboxyl groups are esterified by reacting the glycol component in excess.

It is preferred that these water-soluble resins or water-based emulsion resins (A) be given as soap-free without the use of a surfactant as a solubilizer or emulsifier, or as containing only limited amounts of a surfactant.

The weight-average molecular weight of the water-soluble resin or water-based emulsion resin (A) is preferably from 1,000 to 1,000,000, and more preferably from 2,000 to 500, 000. If said molecular weight is less than 1,000, film formability is inadequate, and with more than 1,000,000, on the other hand, the stability of the treatment agent tends to decline.

The resin compound (B) to be added to the metal surface treatment agent of the present invention has a phenolic resin prepared by condensation of a phenolic compound with formalin as the main backbone structure, and is represented by the general formula (I) for the sake of convenience, but includes not only linear compounds but also three-dimensionally condensed compounds as a matter of course.

With regard to the resin compound (B) to be added to the surface treatment agent of the present invention, alkyl groups with 1 to 3 carbon atoms represented by R² and R³ in the definition of Y include methyl, ethyl, propyl, and isopropyl groups.

In the general formula (I), Z is a bivalent group that is generated with the loss of hydrogen atoms bonded to carbon atoms constituting the aromatic ring from an aromatic compound that can undergo addition condensation with formaldehyde, may have 1 to 4 -CH₂X groups (wherein X represents the same as X in the definition of W mentioned below), and differs from the aromatic ring group in the structure enclosed in brackets with subscript n, or a bivalent group generated with the loss of one hydrogen atom from each of two amino groups of melamine, guanamine, or urea, as already mentioned, but the above-mentioned aromatic compound that can undergo addition polymerization with formaldehyde is not particularly critical; for example, aromatic compounds such as phenolsulfonic acid, alkylene glycol phenyl ethers (examples of the alkylene groups being alkylene groups with 2 to 8, particularly 2 to 6 carbon atoms, such as ethylene, propylene, tetramethylene, and hexamethylene), β-naphthol, naphthalenesulfonic acid, toluene, xylene, aniline, acetanilide, thiophenol, thiophene, furfural, and furfuryl alcohol can be used.

In the definition of X in the definition of W of the general formula (I), the alkyl groups with 1 to 5 carbon atoms represented by R⁴ include methyl, ethyl, propyl, isopropyl, butyl, isobutyl, pentyl, and isopentyl groups, and hydroxyalkyl groups with 1 to 5 carbon atoms include hydroxymethyl, 2-hydroxyethyl, 1-hydroxyethyl, 3-hydroxypropyl, 4-hydroxybutyl, and 5-hydroxypentyl groups.

In the definition of X in the definition of W of the general formula (I), the halogen atoms include chlorine, bromine, iodine, and fluorine atoms.

In the definition of X in the definition of W of the general formula (I), the alkyl groups with 1 to 10 carbon atoms represented by R⁵, R⁶, R⁷, R⁸, and R⁹ include methyl, ethyl, propyl, isopropyl, butyl, isobutyl, pentyl, hexyl, heptyl, octyl, nonyl, and decyl groups, and hydroxyalkyl groups with 1 to 10 carbon atoms include hydroxymethyl, 2-hydroxyethyl, 1-hydroxyethyl, 3-hydroxypropyl, 4-hydroxybutyl, 5-hydroxypentyl, 6-hydroxyhexyl, 7-hydroxyheptyl, 8-hydroxyoctyl, 9-hydroxynonyl, and 10-hydroxydecyl.

In the definition of X in the definition of W of the general formula (I), the acid ions represented by A⁻ include inorganic acid ions such as halogen ions (e.g., chloride ions, bromide ions, fluoride ions), the sulfate ion, the nitrate ion, and the phosphate ion, and organic acid ions such as the acetate ion and the formate ion.

Resin compounds represented by the general formula (I) may be of any structure, whether block-like, alternately linked, or randomly linked, with respect to the repeating [*structural*] units enclosed in brackets with n and m.

If the number of carbon atoms of the alkyl groups R² and R³ in Y of the general formula (I) exceeds 3, hydrophobicity becomes too high. If the proportion of the group P in W present in the resin compound (B) is outside the range of (number of Ps)/(total number of benzene rings and Zs) = 0.2 to 4.0, sufficient corrosion resistance and alkali resistance cannot be provided. Furthermore, the number of carbon atoms of the alkyl or hydroxyalkyl group R⁴ in the definition of the group X exceeds 5, the stability of the treatment agent decreases. Similarly, the stability of the treatment agent decreases, if the number of carbon atoms of the alkyl or hydroxyalkyl groups R⁵ to R⁹ in the general formulas (III) and (IV) exceeds 10. Furthermore, if n exceeds 29, the viscosity becomes too high, and the stability of the resin compound (B) decreases in the treatment agent. It is desirable for n to be an integer of 1 to 29.

Resin compounds (B) represented by the general formula (I) are compounds known in and of themselves or compounds that can be easily produced by those skilled in the art. In other words, they can be obtained by the addition condensation of phenol or bisphenol compounds with or without the substituent P, or these compounds plus compounds that will provide the group Z and can undergo addition condensation with formaldehyde, and formaldehyde, or this [*resulting compound*] plus ammonia, and if needed by converting the group W to the intended one.

The metal compound (C) to be added to the metal surface treatment agent of the present invention, containing at least one metal selected from the group consisting of Zr, Ti, V, Mo, W, Mn, and Ce, is an oxide, hydroxide, complex compound, or salt with an inorganic or organic acid of the above-mentioned metal, and preferably a compound with good compatibility with the above-mentioned water-soluble or water-based emulsion resin (A).

Examples of metal compounds (C) include zirconyl nitrate (ZrO(NO₃)₂), zirconyl acetate, zirconyl sulfate, ammonium zirconyl carbonate ((NH₄)₂(Zr(CO₃)₂(OH)₂]), fluorozirconic acid, titanyl sulfate (TiOSO₄), diisopropoxy titanium bisacetylacetone ((C₅H₇O₂)₂Ti[OCH(CH₃)₂]₂), reaction products of lactic acid with titanium alkoxides, titanium laurate, vanadium pentoxide (V₂O₅), metavanadic acid (HVO₃), ammonium metavanadate, sodium metavanadate, vanadium oxytrichloride (VOCl₃), vanadium trioxide (V₂O₃), vanadium dioxide (VO₂), vanadium oxysulfate (VOSO₄), vanadium oxyacetyl-acetonate (VO(OC(=CH₂)CH_{Z}COCH₃))₂), vanadium acetylacetonate ((OC(=CH₂)CH₂COCH₃))₃), vanadium trichloride (VCl₃), phosphovanadomolybdic acid, molybdic acid (H₂MoO₄), ammonium molybdate, ammonium paramolybdate, sodium molybdate, molybdophosphoric acid compounds (e.g., ammonium molybdophosphate ((NH₄)₃[PO₄Mo₁₂O₃₆]•3H₂O), sodium molybdophosphate (Na₃[PO₄·12MoO₃]•nH₂O), etc.), metatungstic acid (H₆[H₂W₁₂O₄₀]), ammonium metatungstate ((NH₄)₆[H₂W₁₂O₄₀]), sodium metatungstate, paratungstic acid (H₁₀[W₁₂O₄₆H₁₀]), ammonium paratungstate, sodium para tungstate, permanganic acid (HMnO₄), potassium permanganate, sodium permanganate, manganese dihydrogenphosphate (Mn(H₂PO₄)₂ manganese nitrate (Mn(NO₃)₂), manganese(II), (III) or (IV) sulfate, manganese(II) or (III) fluoride, manganese carbonate, manganese(III) or (III) acetate, cerium acetate (Ce(CH₃CO₂)₃), cerium(III) or (IV) nitrate, and cerium chloride. As to molybdenum(VI) compounds, tungsten(VI) compounds, and manganese(VI) compounds, compounds reduced with the use of reducing agents such as alcohols and organic acids can also be used.

It is desirable to further add at least one acid (D) selected from among nitric acid, phosphoric acid, and hydrofluoric acid to the above-mentioned surface treatment agent of the present invention, in order to enhance corrosion resistance and film adhesion. In particular, nitric acid has the effect of increasing resistance to blackening under high-humidity conditions as well.

It is desirable to further add a silane coupling agent (E) to the metal surface treatment agent of the present invention, in order to enhance corrosion resistance and adhesion.

Examples of silane coupling agents include *N*-(2-aminoetbyl)-3-aminopropylmethyldimethoxysilane, *N*-(2-aminoethyl)-3-aminopropyltrimethoxysilane, 3-aminopropyltriethoxysilane, 3-glycidoxypropyltrimethoxysilane, 3-glycidoxypropyl-methyldimethoxysilane, 2-(3,4-epoxycyclohexyl)methyltriethoxysilane, vinylethoxysilane, 3-mercaptopropyltrimethoxysilane, 3-methacryloxypropyl-trimethoxysilane, and 3-methacryloxypropylmethyldimethoxysilane.

The amounts of the various components in the treatment agent of the present invention will be given below, when the total of water-soluble or water-based emulsion resin (A) (solids content), resin compound (B) (solids content), and metal in metal compound (C) is given as 100 mass%. The content of water-soluble or water-based emulsion resin (A) is preferably from 1.9 to 98 mass%, and more preferably from 4.5 to 90 mass%. The content of resin compound (B) is preferably from 1.9 to 98 mass%, and more preferably from 9.5 to 95 mass%. The content of metal compound (C) is preferably from 0.1 to 30 mass%, and more preferably from 0.5 to 20 mass%, in terms of the metal. The content of acid (D) is preferably from 0.1 to 100 g/L, and more preferably from 0.5 to 50 g/L in the treatment agent. The content of silane coupling agent (E) is preferably from 1 to 300 g/L, and more preferably from 10 to 200 g/L.

Furthermore, the total solids concentration in the treatment agent is not particularly critical, provided that the treatment agent can exist stably or has enough liquid properties for coating, but it is preferably from 1 to 60 mass%, and more preferably from 5 to 40 mass%.

In the surface treatment agent of the present invention, it is effective to add a water-dispersible silica sol and/or a metal sol, such as an alumina sol or zirconia sol, in order to enhance the corrosion resistance of the film and film properties such as tensile strength. In this case, the amount to be added is preferably from 5 to 40 mass%, and more preferably from 10 to 30 mass%, as solids content, when the total of water-soluble or water-based emulsion resin (A) (solids content), resin compound (B) (solids content), and metal in the metal compound (C) is given as 100 mass%.

Furthermore, it is effective in the surface treatment agent of the present invention to add at least one selected from among water-based waxes such as polyolefin-based wax, ester-based wax, and hydrocarbon-based wax, in order to enhance the lubricity and workability of the film. In this case, the amount to be added is preferably from 0.5 to 30 mass%, and more preferably from 1 to 20 mass%, when the total of water-soluble or water-based emulsion resin (A) (solids content), resin compound (B) (solids content), and metal in the metal compound (C) is given as 100 mass%.

In addition, an organic crosslinking agent or inorganic crosslinking agent that can crosslink the water-based emulsion resin (A) can be added to the surface treatment agent of the present invention. Organic crosslinking agents that can be used include epoxy-based, melamine-based, aldehyde-based, or isocyanate-based organic crosslinking agents. Examples of inorganic crosslinking agents include metal compounds such as Fe, Co, Ni, Nb, Ta, and Zn excluding the metal compounds specified in the present invention.

The solvent to be used in the surface treatment agent of the present invention consists mainly of water, but it is not intended to preclude the use of a water-soluble organic solvent such as an alcohol, ketone, or Cellosolve in addition, if needed, for example, to improve the drying property of the film.

In addition, a surfactant, an antifoamer, a leveling agent, an antibacterial and antimold agent, a colorant, etc., can be added, without thereby impairing the intended purpose of the present invention or film performance.

The surface treatment process of the present invention will be described below.

Any treatment method may be used as long as the treatment agent can be dried by heating at 50 to 250°C after being applied to the surface of a metallic material, and it is not intended to specify any particular methods for coating and drying.

Usually, the following methods can be used: a roll coat method that applies the treatment agent by roll transferring it to the metallic material surface; a method that pours the treatment agent over the metallic material with a shower wringer or the like and then wrings it with a roll or removes the liquid with an air knife; a method that dips the metallic material in the treatment solution; and a method that sprays the treatment agent over the metallic material. The temperature of the treatment solution is not particularly critical, but the treatment temperature is preferably from 0 to 60°C, and more preferably from 5 to 40°C, since the solvent of the treatment agent consists mainly of water.

Furthermore, no particular treatment procedure will be specified, but usually the base material is cleaned with an alkali or acid degreasing agent, or by hot water washing, solvent washing, etc., to remove adhering oil and dirt before carrying out the treatment. Thereafter, surface adjustment is carried out with acids, alkalis, etc., if necessary. In the cleaning of the metallic material surface, it is desirable to carry out rinsing after cleaning, so that as little cleaner as possible remains on the metallic material surface.

The drying process does not necessarily require heat but may involve only physical drying by air drying or with an air blower, when adhering water is only to be removed without the need for accelerating the setting of water-soluble or water-based emulsion resin (A), but heat drying is required in order to accelerate the setting of the resin (A) or to enhance the covering effect by softening. The temperature in such a case is preferably from 50 to 250°C, and more preferably from 60 to 220°C.

The coating weight of the film to be formed is preferably from 30 to 5,000 mg/m², and more preferably from 50 to 3,000 mg/m², in terms of dry film weight. With less than 30 mg/m², sufficient corrosion resistance and adhesion to a topcoat cannot be provided, and with more than 5,000 mg/m², cracks develop in the film and the adhesion of the film itself declines.

The surface treatment agent of the present invention is thought to impart excellent corrosion resistance and coat adhesion to the base material by reacting with the metallic material surface, forming a film with good adhesion, and also forming a film of the resin components in the process of being applied to a metallic material and dried.

The water-soluble or water-based emulsion resin (A), resin compound (B), and metal compound (C) form a compact three-dimensional structure, forming a film, and at the same time react with and stick fast to the metal surface during application of the treatment agent or in the heat drying process. All the substituents -CH₂X specified in the resin compound (B) act as cationoid (-CH₂⁺), and undergo a crosslinking reaction in the manner of electrophilic substitution with sites (aromatic rings) with a high electron density in the resin backbone, but these cationoid groups also react with sites with a high electron density in the metal surface, and the resin precipitates and sticks fast to the surface. All the specified metal compounds (C) are transition metal compounds and have vacant orbitals, and are considered as a kind of cationoid and similarly have the property of adhering fast to the metal surface.

The reason why the film thus formed has excellent corrosion resistance can be considered as follows, apart from the metal surface barrier property of the formed film. The resin compound (B) specified in the present invention is a compound that has a resonance-stabilized structure, and the specified metal compound (C) is a transition metal compound as previously mentioned. The film formed with the resin compound (B) and specified metal compound (C) adheres fast to the metal surface by reacting therewith, and is thereby located close enough to overlap the outer orbitals of the metal of the base material, thus serving to delocalize electrons generated by corrosion with the use of φ orbitals, and this fact is thought to keep the surface potential uniform and to impart excellent corrosion resistance (at cut edges and scratches as well as in flat parts). The anticorrosion mechanism of the conventional chromate film is generally said to be a self-repairing action in that soluble hexavalent chromium dissolves out and re-precipitates in exposed areas of the metal surface, but the present inventors think that the anticorrosion mechanism of the chromate film is a mechanism similar to that of the treatment agent of the present invention, arising from the high cationoidic property of chromium (high reactivity with regard to adhering to the metal surface) and excellent (corrosion electron) delocalizing effect, and the present invention was developed based on these ideas.

On the other hand, the water-soluble or water-based emulsion resin (A) is formed on the aforesaid film formed on the metal surface (i.e., a double-layer structure is provided), and has the effect of increasing the corrosion resistance by enhancing the barrier property, and in addition has the effect of increasing fingerprint resistance and workability. The acid (D) presumably serves to accelerate the reaction of the resin compound (B) and metal compound (C) with the metal surface by etching the metal base material, and to form a film with higher adhesion.

### ACTUAL EXAMPLES

The present invention will be illustrated below by actual examples and comparison examples, but these actual examples are mere examples and are not intended to limit the present invention in any way. The evaluation methods for the treated sheet samples prepared in the actual examples and comparison examples are as follows:

### 1. Metal Materials to be Treated

A: Electrodeposition zinc-coated steel sheet (thickness = 0. 8 mm)
B: Hot-dip zinc-coated steel sheet (thickness = 0.8 mm)
C: 55% aluminum zinc-coated steel sheet (thickness = 0.5 mm)

### 2. Treatment Solutions

### (1) Treatment Solution Components:

The water-soluble or water-based emulsion resins (A) used will be given below.
a1: Cation modified epoxy resin (Asahi Denka Kogyo (Ltd.) product, Adeka Resin EPEC-0436)
a2: Nonionic water-soluble polyester resin (Go-ou Kagaku Kogyo (Ltd.) product, FR-627)
a3: Cationic polyurethane resin (Asahi Denka Kogyo (Ltd.) product, Adeka Bon Tighter HUX-670)
a4: Cationic acrylic resin (Nihon NSC (Ltd.) product, Kanebinol KD21)
a5: Nonionic water-based polyurethane resin (Dai-ichi Kogyo Seiyaku (Ltd.) product, Super Flex E-2000)

The resin compounds (B) represented by the general formula (I) used in Actual Examples are shown in Table 1 [*see page 24 -- Tr. Ed.*]

The numerical values [*in Table 1*] in parentheses show (number of Ps)/(total number of benzene rings and Zs) for W and the number of substitutions with Y per benzene ring for Y.

In Table 1, ①, ②, and so on represent the following for each group:
- R¹:: ①-CH₂- ②-CH₂-NH-CH₂-
- W:: ①H ②-CH₂OH
③-CH₂OCH₃ ④-CH₂Br
⑤-CH₂N (CH₃) (CH₃CH₂OH)
⑥-CH₂N (CH₂CH₂OH)₂
⑦-CH₂NH₂ ⑧-CH₂ N⁺ (CH₃)₃ • OH⁻
- Y::

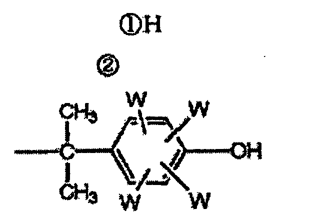

Aromatic compounds that serves as the source of group Z:
① Aniline ② Furfuryl alcohol

The metal compounds used are given below.
c1: Ammonium zirconium carbonate 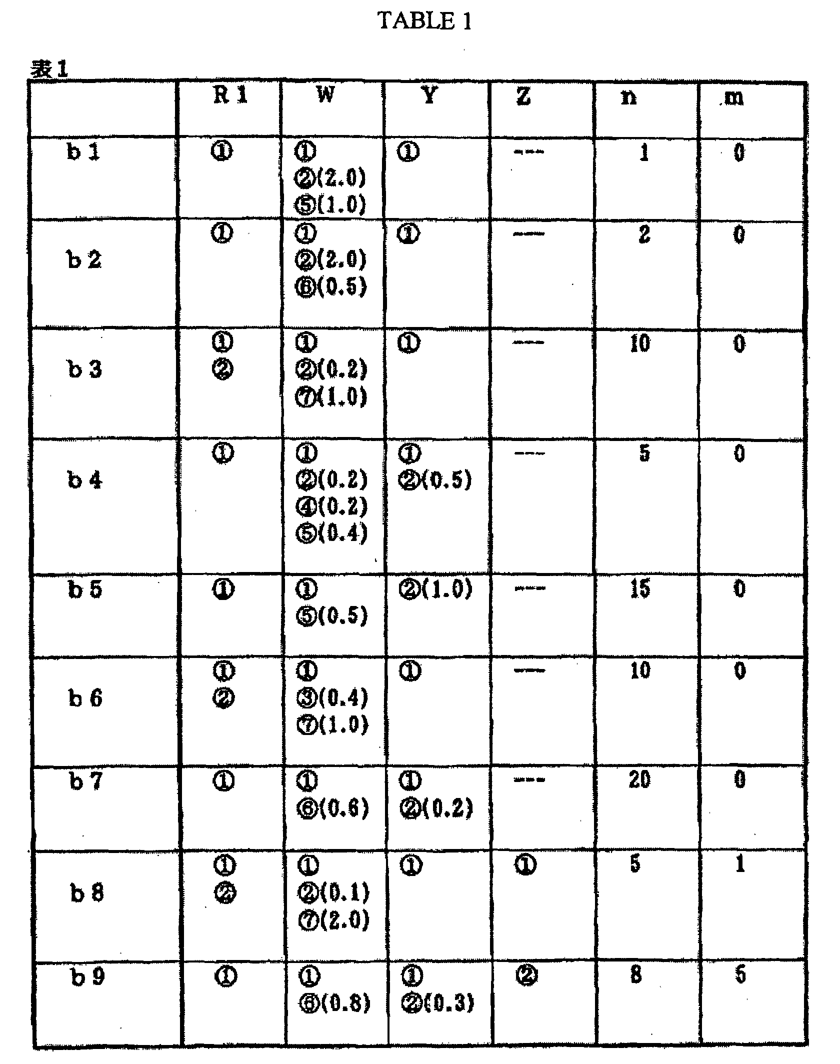
c2: Fluorozirconic acid
c3: Vanadium oxyacetylacetonate
c4: Ammonium paramolybdate
c5: Ammonium metatungstate
c6: Titanium laurate
c7: Manganese carbonate

The acids (D) used are given below.
d1: Nitric acid
d2: Phosphoric acid
d3: Hydrofluoric acid

The silane coupling agents (E) used are given below.
e1: 3-Mercaptopropyltrimethoxysilane
e2: *N*-(2-Aminoethyl)-3-aminopropyltrimethoxysilane
e3: 3-Glycidoxypropylmethyldimethoxysilane

### 3. Treatment Process

### (1) Degreasing

The base material was degreased with an alkali degreasing agent, Parclean 364S (20 g/L bath prepared, 60°C, 10-second spray, spray pressure 0.5 kg/cm²) produced by Nihon Parkerizing (Ltd.) and then spray washed with water for 10 seconds.

### (2) Coating and Drying

I: A treatment solution adjusted to a concentration of 10 mass% was applied by bar coating to adjust the dried mass to 700 mg/m², and dried at 80°C (PMT).
II: A treatment solution adjusted to a concentration of 16 mass% was applied by bar coating to adjust the dried mass to 1,000 mg/m², and dried at 150°C (PMT).

### 4. Evaluation Methods

### (1) Corrosion Resistance

With respect to the treated sheet samples prepared in the actual examples and comparison examples, the corrosion resistance was tested on specimens subjected to no working (flat part), specimens with crosscuts reaching the base material, produced with an NT cutter (crosscut part), and specimens with a 7-mm Erichsen extrusion (worked part). The evaluation methods were as follows:
(Flat Part) The area of white rust generated after a 72-hour salt spray was determined based on the salt spray test method JIS-Z-2371, to evaluate the corrosion resistance.
Evaluation Criteria: Area of white rust generated
   ⓞ = less than 10% , ○ = from 10% to less than 30%,
   Δ = from 30% to less than 60%, × = 60% or more
(Crosscut Part) White rusting trends after a 72-hour salt spray were evaluated by the naked eye based on the salt spray test method JIS-Z-2371.
Evaluation Criteria: White rusting trends
   ⓞ = practically no rusting, ○ = slight rusting,
   Δ = recognizable rusting, × = severe rusting
(Worked Part) White rusting trends after a 72-hour salt spray were evaluated by the naked eye based on the salt spray test method JIS-Z-2371.
Evaluation Criteria: White rusting trends
   ⓞ = practically no rusting, ○ = slight rusting,
   Δ = recognizable rusting, × = severe rusting

### (2) Alkali Resistance

Treated sheet samples were sprayed for 2 minutes with an aqueous solution of a degreasing agent provided by preparing an initial bath of 20 g/L of an alkali degreasing agent, Parclean 3645 produced by Nihon Parkerizing (Ltd.), and adjusting its temperature to 65°C, washed with water, and then dried at 80°C. The corrosion resistance of these sheets was tested under the conditions and by the evaluation methods described in section (1) above.

### (3) Fingerprint Resistance

The treated sheet surface was pressed with a finger, and fingerprint traces were observed by the naked eye, to evaluate fingerprint resistance.
Evaluation Criteria: ⓞ = no traces at all, ○ = very slight traces present,
Δ = traces present, × = clearly remaining traces

Table shows the contents of the treatment solutions and treatment methods of Actual Examples 1-14 and Comparison Examples 1-4, and Table 3 shows the test evaluation results.

As is clear from Table 3, it can be seen that Actual Examples 1-14 consisting of films formed with the use of the surface treatment agents of the present invention are satisfactory in treatment solution stability and fingerprint resistance, and highly safe because of not containing chromium, and have corrosion resistance better than that of the chromate treatment in all the flat, crosscut, and worked parts.

On the other hand, Comparison Example 1 which did not contain the water-soluble or water-based emulsion resin (A) which is an essential component of the treatment agent of the present invention, Comparison Example 2 which did not contain the resin compound (B), and Comparison Example 3 which did not contain the metal compound (C) were poor in corrosion resistance. Comparison Example 4 which was treated with chromate (Zinchromium 3360H) was particularly poor in fingerprint resistance and corrosion resistance in the worked part after alkali degreasing.

**Table 2**

| Actual Examples and Comparison Examples | Base Material | Treatment Solution Composition (mass%)* | | | | | Treatment Method |
|---|---|---|---|---|---|---|---|
| | | (A) | (B) | (C) | (D) | (E)** | |
| Actual Example 1 | A | a1(45) | b1(50) | c1(5) | d1(3) | ―- | I |
| Actual Example 2 | B | a1(70) | b1(27) | c4(3) | d2(5) | --- | II |
| Actual Example 3 | A | a1(35) a2(10) | b2(45) | c5(5) c6(5) | d2(2) d3(1) | ―- | I |
| Actual Example 4 | B | a2(20) a3(60) | b2(10) | c2(5) c3(5) | d1(10) d3(2) | e1(20) | II |
| Actual Example 5 | A | a3(10) | b1(87) | c1(3) | d1(7) | e2(80) | I |
| Actual Example 6 | A | a3(62) | b3(30) | c2(8) | d2(4) | e2(30) | II |
| Actual Example 7 | A | a3(60) | b3(38) | c2(2) | --- | --- | I |
| Actual Example 8 | C | a3(55) | b4(30) | c4(15) | d1(2) d2(3) | e2(10) e3(20) | II |
| Actual Example 9 | A | a4(20) | b5(70) | c5(10) | d2(5) | | I |
| Actual Example 10 | A | a5(25) | b5(70) | c5(5) | d2(5) | e1(5) | I |
| Actual Example 11 | B | a4(55) | b6(30) | c6(15) | --- | e3(10) | II |
| Actual Example 12 | C | a3(20) | b7(70) | c6(5) c7(5) | d2(2) d3(3) | --- | I |
| Actual Example 13 | C | a4(57) | b8(40) | c2(3) | d1(3) | --- | II |
| Actual Example 14 | C | a5(70) | b9(20) | c3(10) | --- | --- | II |
| Comparison Example 1 | A | Component (A) not used in Actual Example 1 | | | | | I |
| Comparison Example 2 | B | Component (B) not used in Actual Example 2 | | | | | II |
| Comparison Example 3 | A | Component (C) not used in Actual Example 3 | | | | | I |
| Comparison Example 4 | A | Chromate (Zinchromium 3360H; Cr 20 mg/m²) | | | | | *** |

| | | | | | | | |
|---|---|---|---|---|---|---|---|
| *Value when the sum of masses of component (A), component (B), and metal of component (C) is given as 100 mass%. | | | | | | | |
| **Mass (g/L) per liter of treatment agent. | | | | | | | |
| ***A coating-type chromate, Zinchromium 3360H, was applied by roll coating to give a Cr coating weight of 20 mg/m², and heat dried at 80°C (PMT). | | | | | | | |

**Table 3**

| Evaluation No. | Corrosion Resistance | | | | | | Finger-print Resistance |
|---|---|---|---|---|---|---|---|
| | flat part | | crosscut part | | worked part | | |
| | without*) | with** | without* | with** | without* | with** | |
| Actual Example 1 | ⓞ | ⓞ | ⓞ | ○ | ○ | ○ | ⓞ |
| Actual Example 2 | ⓞ | ○ | ⓞ | ○ | ○ | ○ | ⓞ |
| Actual Example 3 | ⓞ | ⓞ | ○ | ⓞ | ○ | ○ | ⓞ |
| Actual Example 4 | ⓞ | ⓞ | ⓞ | ⓞ | ⓞ | ⓞ | ⓞ |
| Actual Example 5 | ⓞ | ⓞ | ⓞ | ⓞ | ⓞ | ⓞ | ⓞ |
| Actual Example 6 | ⓞ | ⓞ | ⓞ | ⓞ | ⓞ | ⓞ | ⓞ |
| Actual Example 7 | ⓞ | ○ | ○ | ○ | ⓞ | ○ | ⓞ |
| Actual Example 8 | ⓞ | ⓞ | ⓞ | ⓞ | ⓞ | ⓞ | ⓞ |
| Actual Example 9 | ⓞ | ⓞ | ⓞ | ⓞ | ○ | ○ | ⓞ |
| Actual Example 10 | ⓞ | ⓞ | ⓞ | ⓞ | ⓞ | ⓞ | ⓞ |
| Actual Example 11 | ⓞ | ⓞ | ○ | ○ | ⓞ | ⓞ | ⓞ |
| Actual Example 12 | ○ | ○ | ○ | ○ | ○ | ○ | ⓞ |
| Actual Example 13 | ⓞ | ⓞ | ⓞ | ⓞ | ○ | ○ | ⓞ |
| Actual Example 14 | ○ | ○ | ○ | ○ | ○ | ○ | ⓞ |
| Comparison Example 1 | Δ | X | X | X | X | X | ⓞ |
| Comparison Example 2 | Δ | Δ | Δ | X | Δ | X | ⓞ |
| Comparison Example 3 | O | X | O | X | O | X | ⓞ |
| Comparison Example 4 | ⓞ | Δ | ⓞ | Δ | Δ | X | X |

| | | | | | | | |
|---|---|---|---|---|---|---|---|
| * without alkali degreasing | | | | | | | |
| ** with alkali degreasing | | | | | | | |

The treatment agents of the present invention are non-chromate type agents that contain no harmful chromium compounds, and the films that are formed from the invention surface treatment agents have corrosion resistance that equals or surpasses that of conventional chromate films, not only in flat parts but also in scratched and worked parts, and also have excellent alkali resistance and fingerprint resistance; thus, the surface treatment agent, surface treatment process, and surface treated metal materials of the present invention are extremely valuable for use in industry.

## Claims

1. A surface treatment agent for metal, prepared by adding at least one water-soluble resin or water-based emulsion resin (A) selected from among cationic or nonionic urethane, acrylic, epoxy, polyester, and polyamide resins, a resin compound (B) represented by the general formula (1), and a metal compound (C) containing at least one metal selected from the group consisting of Zr, Ti, V, Mo, W, Mn, and Ce, to water: 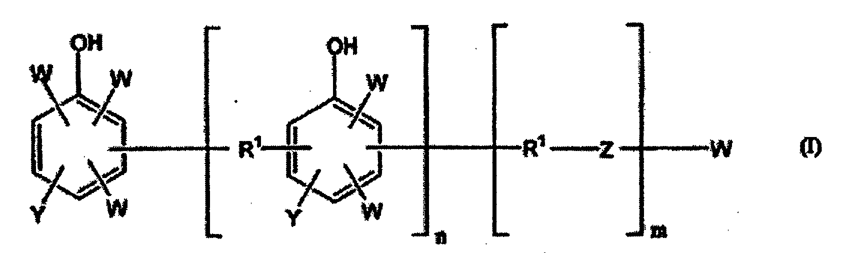 {in the formula, each R¹ independently represents -CH₂-, -CH₂-NH-CH₂-, or
-CH=N-CH₂-; Y represents a hydrogen atom or a group represented by the general formula (II) 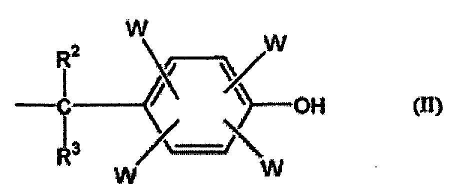 (wherein R² and R³ independently represent a hydrogen atom or an alkyl group with 1 to 3 carbon atoms); Z is a bivalent group that is generated with the loss of hydrogen atoms bonded to carbon atoms constituting the aromatic ring from an aromatic compound that can undergo addition condensation with formaldehyde, may have 1 to 4 -CH₂X groups (wherein X represents the same as X in the definition of W mentioned below), and differs from the aromatic ring group in the structure enclosed in brackets with subscript n, or a bivalent group generated with the loss of one hydrogen atom from each of two amino groups of melamine, guanamine, or urea; each W is independently hydrogen or a group P, said P being -CH₂X, -CH₂NHCH₂X, or -CH=NCH₂X [wherein X is OH, OR⁴ (R⁴ representing an alkyl group with 1 to 5 carbon atoms or a hydroxyalkyl group with 1 to 5 carbon atoms), a halogen atom, or a group represented by the general formula (III) or (IV) 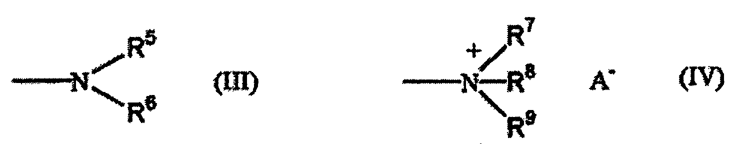 (wherein R⁵, R⁶, R⁷, R⁸ and R⁹ independently represent a hydrogen atom, an alkyl group with 1 to 10 carbon atoms, or a hydroxyalkyl group with 1 to 10 carbon atoms, and A⁻ represents a hydroxyl ion or acid ion)], the degree of substitution with group P satisfying the relationship: (number of Ps)/( total number of benzene rings and Zs) = 0.2 to 4.0, and the ratio: (number of -CH₂X groups where X is a functional group represented by the formula (III) or (IV) + number of -CH₂NHCH₂X groups + number of -CH=NCH₂X groups)/( total number of Ps) being 0.1 to 1.0; n is 0 or an integer of 1 to 29; and m is 0 or an integer of 1 to to.}

2. A surface treatment agent for metal as described in Claim 1, wherein the content of said water-soluble resin or water-based emulsion resin (A) is 1.9 to 98 mass%, the content of said resin compound (B) is 1.9 to 98 mass%, and the content of the metal in said metal compound (C) is 0.1 to 30 mass%, when the total of (A), (B), and metal in (C) is given as 100 mass%.

3. A surface treatment agent for metal as described in Claim 1 or Claim 2, wherein at least one acid (D) selected from among nitric acid, phosphoric acid, and hydrofluoric acid is also added.

4. A surface treatment agent as described in Claim 3, wherein the concentration of said acid (D) in said surface treatment agent for metal is 0.1 to 100 g/L.

5. A surface treatment agent as described in one of Claims 1 to 4, wherein a silane coupling agent (E) is also added.

6. A surface treatment agent as described in Claim 5, wherein the concentration of said silane coupling agent (E) in said surface treatment agent for metal is 1 to 300 g/L.

7. A process for the surface treatment of metallic materials, **characterized in that** the surface treatment agent for metal described in one of Claims 1 to 6 is applied to the surface of a metallic material and dried, and thereby a film is formed on said metallic material surface.

8. Metallic materials that contain a film formed with the use of the surface treatment process described in Claim 7.
